# EUROPEAN PATENT SPECIFICATION

(11) **EP 1 135 988 B1**
(45) Date of publication and mention of the grant of the patent: **21.05.2003**
(21) Application number: 01610028.1
(22) Date of filing: 19.03.2001
(51) Int. Cl.: A22B 5/00

(54) **Apparatus and method for automatically cutting out the jowl of a carcase**
Vorrichtung und Verfahren zum automatischen Ausschneiden vom Kieferknochen eines Schlachttiers
Dispositif et procédé de découpage automatique de la mâchoire d'un animal abattu

(30) Priority: 20.03.2000 DK 200000459
(43) Date of publication of application: 26.09.2001
(73) Proprietor: SLAGTERIERNES FORSKNINGSINSTITUT, DK-4000 Roskilde (DK)
(72) Inventor: Hansen, Niels Worsoe, 4320 Lejre (DK); Andersen, Kjeld Neve, 2670 Greve Strand (DK); Jensen, Niels R., 2900 Hellerup (DK); Nielsen, Jens Ulrich, 2880 Bagsvaerd (DK)
(74) Representative: Plougmann & Vingtoft A/S

(56) References cited:
- WO-A-93/20703

## Description

The present invention relates to an apparatus and a method for automatically cutting out the jowl of a carcase suspended by its hind legs from a first restraining arrangement.

Today cutting out the jowl takes place as a manual operation. It is carried out by the operator sticking a knife through the cut made in the throat of the carcase in connection with the evisceration of organs. The knife is stuck in at a downward angle so that the tip emerges through the rind at the ear. The knife is then driven down towards the snout without damaging the jaw muscle, which is to remain on the cranium. It is important that the knife is driven correctly downwards so that the jowl becomes as large as possible. The working operation can be straining to the operator, but up to the present no apparatus has been discovered which can automatically carry out the operation.

It is known to carry out an automated removal of meat portions from an animal head cut off a carcase. WO 93/20703 (Passchier) describes e.g. an apparatus for boning animal heads. The apparatus comprises a conveyor having a number of retainers for holding heads and a number of stations having mechanically driven pin-shaped members for separating meat and the like from the cranium. WO 94/02024 (MIRINZ) describes an apparatus for removal of jaw meat from an animal head separated from the carcase. The apparatus comprises a clamp for fastening the head, a set of straight knives mounted on a robot arm with several degrees of freedom so that they can be turned and reciprocated during a partial loosening of the jaw meat, and pulling means for gripping the jaw meat and pulling it free from the animal head after cutting. Other examples of apparatuses for automated removal of meat portions from a head separated from the carcase are described in WO 88/07329 (Passchier), WO 88/07820 (Butchers Services), WO 97/05782 (CSIRO), FR 2 749 737 (Mace), US 4 543 689 (IBP) and US 5 533 928 (Kentmaster).

It is common to the above-mentioned apparatuses that the head must be cut off the carcase before removal of the meat portions is initiated. This can interfere with the normal slaughtering procedure and presupposes that a special process line is established for processing of heads and removal of meat portions, said process line having arrangements for holding the heads in a manner sufficiently stable for removal of meat portions to take place with some precision. Furthermore, it is also common to the described apparatuses that no special importance is attached to the state of the meat after removal from the head.

It is the object of the present invention to provide an apparatus for automatically cutting out the jowl of a carcase with a head so that the process may take place on the slaughter line where the usual processing of the carcase is carried out, the cost of construction for allowing an automatic loosening of the jowl thus being reduced and the process flow thus being made more efficient.

By the term "automatically cutting out the jowl" it is understood that the jowl is automatically at least partly disengaged from the head, and in a preferred embodiment of the invention it is completely disengaged.

The apparatus of the invention is characterized in that it comprises
- a second restraining arrangement having a restraining means and a controllable moving means suitable for moving the restraining means into fixing engagement with a jaw portion of the carcase;
- a cutting arrangement having at least one cutting device and a controllable moving device suitable for moving the cutting device(s) into cutting through the rind of the head of the carcase and loosening the jowl; and
- a control arrangement adapted to control the apparatus so that the moving means moves the restraining means into engagement with the jaw portion of the carcase before the moving device moves the cutting device(s) into cutting through the rind.

The first restraining arrangement is typically formed by a gambrel or a second arrangement suitable for restraining both hind legs of a carcase and for supporting the weight of the carcase so that it may be suspended in mid-air from the arrangement. In an advantageous embodiment of the invention, the arrangement is suitable for use in a conveyor for carcases suspended from the arrangement so that the carcase may be moved by means of the conveyor to a station or an area with the apparatus of the invention. After the cutting out process the conveyor may in turn transport the carcase away from the station or the area. The cutting out process may take place while the carcase stands still or while it moves along the slaughter line. In the latter case the processing tools of the apparatus must be able to follow the carcase.

The restraining means of the second restraining arrangement may be of known construction in itself. DK 125 508 (Vekå-Konstruksjoner), DK 139 373 (MITAB), DK 151 063 (Slagteriernes Forskningsinstitut) and DK 151 448 (Nutridan Engineering) show apparatuses having restraining means for a carcase which is cleaved in the apparatus.

The apparatus of the present invention may have a restraining means comprising a hook for engagement with the lower jaw of the carcase, and the second restraining arrangement may be adapted to move the hook into engagement with the mandibular angle of a carcase from the throat side.

The head may be fixed in several ways, e.g. by the second restraining arrangement comprising several means fixing the head by a combined engagement. However, preferably, the movement of the restraining means into engagement comprises a movement of the means towards the carcase followed by a movement in a substantially downward direction away from the first restraining arrangement to exert a pull at the carcase for fixation of the carcase.

The control arrangement controlling the moving means and device may e.g. be a computer capable of carrying out this function by means of a computer program. Alternatively, the arrangement may be one or more logical units, such as a PLC control particularly adapted to carry out the function, or it may be a combination of a computer and logical units. The arrangement may be a local unit capable of exchanging data with other control arrangements or with a computer.

The vertical position of the cutting device(s) is preferably adapted individually after each individual carcase so as to obtain a cut as precise as possible, irrespective of individual differences in the length of the carcases. This adaptation may take place by means of sensors determining, either at the position where the cut is performed or at an upstream position on a slaughter line, the vertical position of one or more fixed points on the carcase, after which the control arrangement sets the vertical position of the cutting device(s). However, preferably, the vertical position at which the cutting device(s) initiate(s) cutting into the carcase is determined by the vertical position at which the restraining means engages with the carcase.

A simple solution to the positioning includes the cutting device(s) being mounted on the same vertical guide as the restraining means and displaced in the vertical direction together with the restraining means.

In this description the term "vertical" is used in the meaning "in the longitudinal direction of the carcase". The longitudinal direction of the carcase is normally in the vertical direction but may, however, assume another position than vertical, e.g. if the second restraining arrangement is moved in the horizontal direction during or after fixation.

The apparatus preferably comprises a cutting device, which is moved into cutting through the rind and further under the rind from the back side of the carcase from a position at the ear of the carcase, and which is then driven downwards, forming a cut causing loosening of the jowl.

In a first advantageous embodiment, a cutting device comprises an elongated knife blade. In particular the cutting device comprises an elongated, substantially horizontally arranged knife blade positioned on one of the sides of a vertical mid-plane of a carcase suspended from the first restraining arrangement, said knife blade having a pointed front end adapted to cut through the rind and a cutting edge along a lower edge thereof, and curving with the inwardly curving side facing the mid-plane, and the moving device is adapted to drive the cutting device into the carcase through the rind thereof and further under the rind until the tip emerges at the throat by a curve movement substantially corresponding to the curve of the knife blade. In this case substantially horizontal means preferably horizontal or a position deviating from horizontal with up to 30°.

However, according to the invention first cutting devices may also be used, said cutting devices making straight cuts, the jowl thus being loosened in such a manner that it is not completely disengaged but only partly disengaged from the head.

In order to be able to cut out the jowl on both sides of the head, the apparatus preferably comprises two blades laterally reversed and positioned on each side of a vertical mid-plane of a carcase.

The curve of the knife blade is preferably such that the blade substantially follows the shape of the cranium of the carcase under the jowl during insertion. In this manner the jowl may be cut out (loosened) without damaging the jaw muscle.

The moving device may further be adapted to move the knife blade in an oscillating curve movement while the knife blade is driven downwards, said curve movement corresponding to the curve movement during insertion. In this manner the knife blade may easier be driven through the carcase without tearing the tissue it severs.

According to a second embodiment of the invention the cutting arrangement comprises a second cutting device, which is moved to cut through a cutting plane at the throat and further under the rind, and which is then driven downwards, forming a cut causing loosening of the jowl, the cut thus meeting the cut formed by the first cutting device by cutting from the back side. Thus, cutting devices making straight cuts may be used, such cuts being more simple to perform than curved cuts as described above.

Furthermore, preferably, the apparatus according to this embodiment comprises a throat opening arrangement having a throat opener which, by engagement with the edges of a cut in the throat of the carcase, forces the edges from each other and opens the cut, and a controllable moving arrangement suitable for moving the throat opener into said engagement, and the control arrangement is adapted to control the moving arrangement, the throat opener thus being brought into engagement with the edges before the second cutting device is moved to cut through the cutting plane at the throat.

By using the apparatus according to the second embodiment, most of the jaw muscle may be cut off at the same time as the jowl is cut out. By this a manual process is further eliminated. The jaw muscle is a valuable joint of meat.

In a particular form of the second embodiment, the first and the second cutting devices may advantageously comprise rotating blades, and the cutting arrangement may comprise drive units for rotating the blades during performance of the cuts.

The method of the invention is characterized in that
- a controllable moving means moves a restraining means of a second restraining arrangement into fixing engagement with a jaw portion of the carcase;
- a controllable moving device moves a cutting device of a cutting arrangement into cutting through the rind of the head of the carcase; and
- the controllable moving device then moves the cutting device downwards during loosening of the jowl.

The apparatus and the method of the invention are particularly used on a carcase after evisceration of organs through a cut in the belly, the chest and the throat and before cleaving. They are preferably used on pig carcases.

Below the invention will be explained in greater detail with reference to the drawings in which
- Fig. 1 shows schematically an apparatus according to a first embodiment of the invention;
- Fig. 2 shows a side view of a cutting device used in the apparatus of Fig. 1;
- Fig. 3 shows a top view of the device of Fig. 2;
- Fig. 4 shows a restraining arrangement used in the apparatus of Fig. 1;
- Fig. 5 shows schematically an apparatus according to a second embodiment of the invention;
- Fig. 6 shows a side view of a throat opener used in the apparatus of Fig. 5;
- Fig. 7 shows a top view of the throat opener of Fig. 6;
- Fig. 8 shows a side view of a first cutting device used in the apparatus of Fig. 6; and
- Fig. 9 shows a back view of the device of Fig. 8.

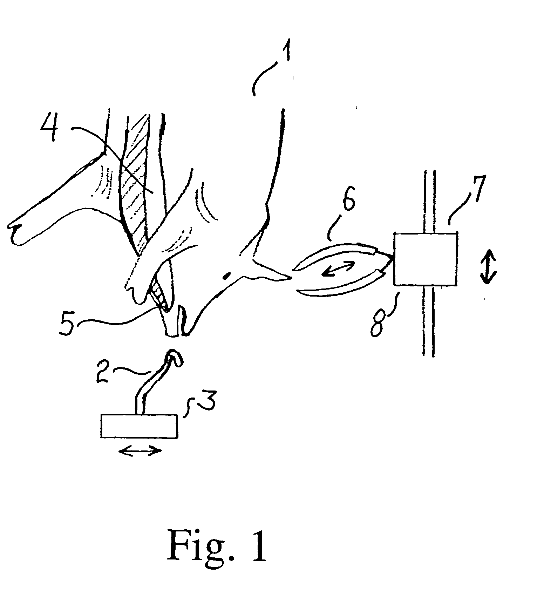

In Fig. 1 a carcase 1 is suspended from a gambrel, not shown, on a conveyor transporting the carcase along a slaughter line to an area where the first embodiment of the apparatus is placed. The restraining arrangement of the apparatus for a jaw portion and the cutting arrangement are placed on a movable slide or the like, said slide being movable in the direction of motion of the conveyor so that cutting out the jowl may take place while the carcase 1 is carried forward on the slaughter line. The apparatus comprises a hook 2 and a system 3 having a pneumatic cylinder for moving the hook 2 in the horizontal direction towards the chest and throat opening 4 of the carcase 1 so that the hook may be engaged with the mandibular angle 5 of the carcase 1. The apparatus also comprises a set of knives 6, whose knife blades are curved in a horizontal plane and laterally reversed in relation to each other so that they can follow the shape of the cranium closely as the jowl is cut out. The knives 6 are moved in the vertical direction by a system 7 having a pneumatic cylinder and also moving the hook 2 in the vertical direction. The knives 6 may further be moved in the horizontal direction by a pneumatically driven moving system 8 placed in the same box as the system 7. The two parts can therefore not be distinguished in the figures.

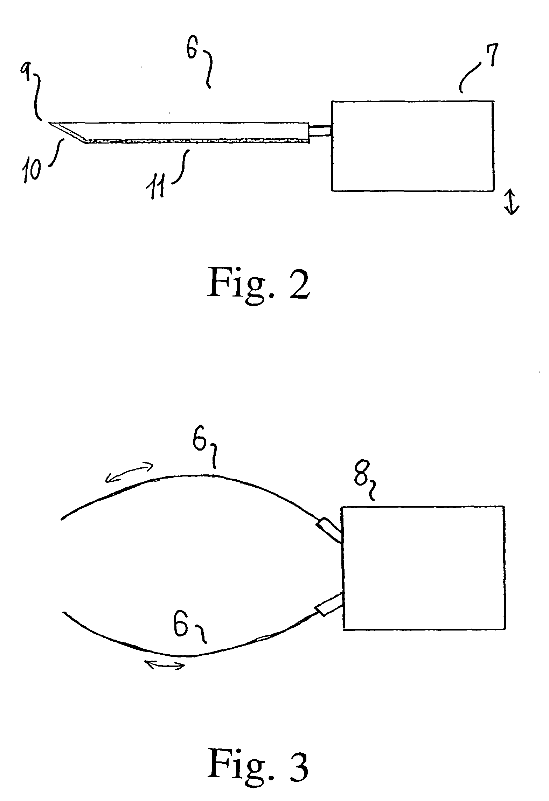

In Fig. 2 it is seen that the knives 6 have a pointed front end 9 and an oblique cutting edge 10 and a straight, lower cutting edge 11. In Fig. 3 it is seen that the knife blades have a laterally reversed curve in the horizontal plane. The moving system 8 is adapted partly to move the knife blades into the carcase 1 along a path corresponding to the curve of the blades and partly to move the blades back and forth in the same path to facilitate the blades' loosening of the jowl during cutting where the knives are driven downwards by the system 7.

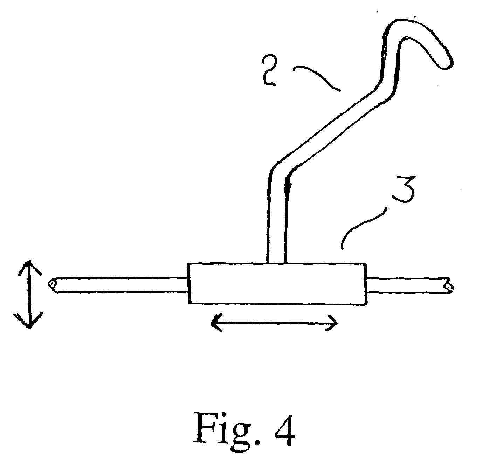

In Fig. 4 the movement of the hook 2 is indicated by arrows. The horizontal movement is caused by the associated system 3, whereas the vertical movement is caused by the system 7, which also moves the knives 6 in the vertical direction.

The apparatus operates with the following process steps:

From an upstream placed measuring station the apparatus receives a signal indicating the distance from the forelegs of the carcase 1 to the gambrel. The main slide places the restraining and cutting arrangements of the apparatus in the starting position. The hook 2 is driven into the mandibular angle 5 through the throat opening 4. The hook 2 draws the carcase tight so as to fix it. The curved knives 6 are driven into the head directly under the ear of the carcase 1 and are driven in a curved path until the tips 9 emerge through the cutting planes in the throat opening of the carcase 1. The oscillating movement of the knives 6 in the same curved path is initiated, as a frequency is chosen for the oscillation, said frequency deviating from the natural frequencies of the fixed carcase 1. The knives 6 are moved down towards the snout of the carcase 1 during loosening of the jowl, and they are driven at an angle so that they follow the shape of the head. After loosening the knives 6 are drawn back and up to the starting position. The hook 2 is driven out of engagement with the carcase 1. The hook 2 and the knives 6 are washed.

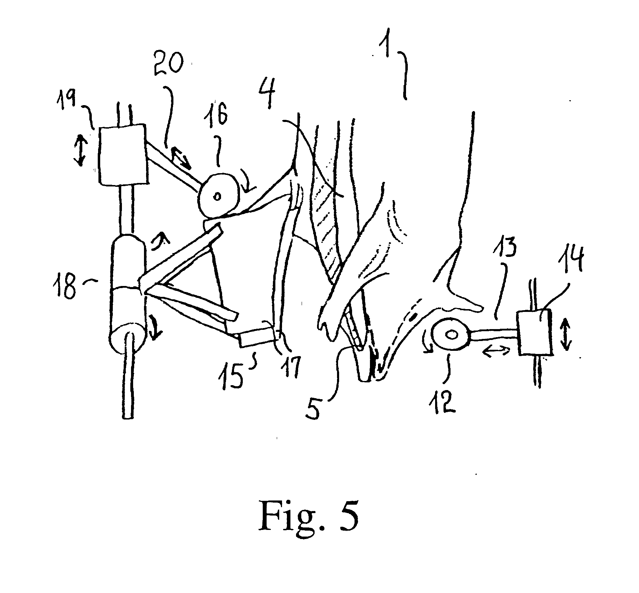

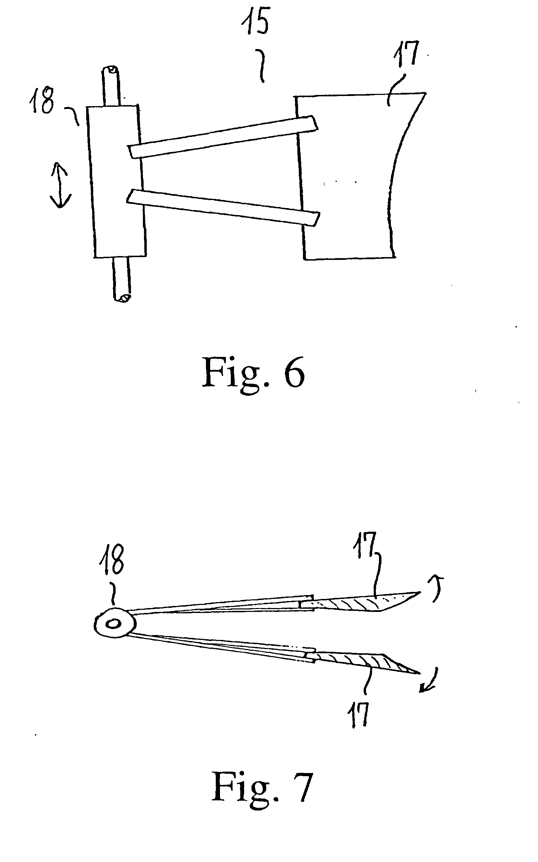

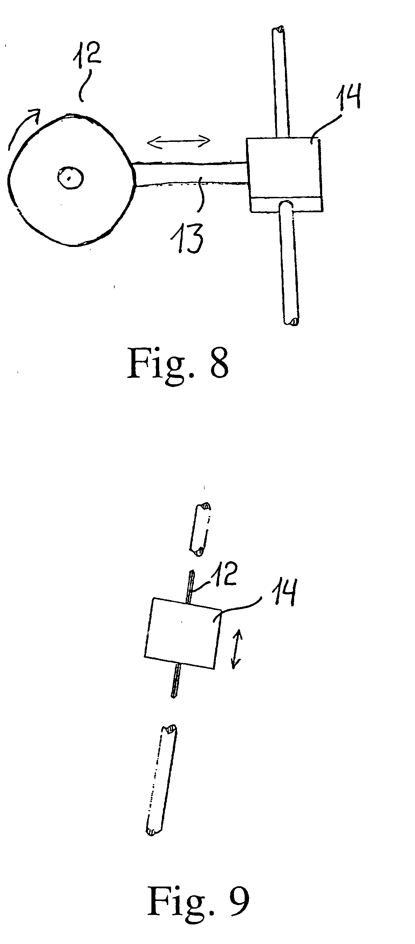

The embodiment shown in Figs. 5-9 uses the same hook system as the embodiment of Figs. 1-4. Therefore, the system is not shown in the figures. The apparatus comprises a first set of rotatable saw blades 12 for making a cut through the rind on the side of the head of the carcase 1 by an oblique movement towards the snout. The insertion height of the blades 12 may be determined by mounting them on the same vertical guide as the hook system, or it may be determined from a measuring signal indicating the distance from the forelegs to the gambrel. The saw blades 12 may be moved in the horizontal direction by a system 13 having a pneumatic cylinder, and a second system 14 having a second pneumatic cylinder may move the saw blades 12 in the vertical direction.

A throat opener 15 is used to force the edges of the chest and throat opening 4 from each other so that they are positioned in relation to a second set of rotatable saw blades 16. Both the throat opener 15 and the saw blades 16 are moved in the vertical direction by the same system that moves the hook system, their vertical position thus being adapted to the length of the individual carcase 1. The throat opener 15 has two blades 17 which may be turned by means of two pneumatic motors 18 for widening the chest and throat opening 4. The saw blades 16 may be moved in the vertical direction by means of a system 19 having a pneumatic cylinder. A second system 20 having a second pneumatic cylinder may move the blades obliquely downwards. The throat opener 15 and the saw blades 16 may further be moved in the horizontal direction towards and away from the carcase 1 by means of a moving system not shown.

The apparatus operates with the same four positioning steps for the hook as the embodiment of Figs. 1-4. After fixation the following process steps are performed:

The first saw blades 12 are rotated and inserted in the head along a straight path. The saw blades 12 are then moved down towards the snout of the carcase 1 during loosening of a portion of the jowl. The rotation of the saw blades 12 is stopped, and the blades are returned. The throat opener 15 is moved horizontally towards the carcase and is turned so that the blades 17 are engaged with the edges of the chest and throat opening 4 and widen the chest and throat opening 4. The second set of saw blades 16 are rotated and driven into the cutting plane at 4 and further into the carcase 1, forming a cut meeting the cut made by the first set of saw blades 12. The second set of saw blades 16 are moved down towards the snout of the carcase 1 during loosening of a second portion of the jowl and the jaw muscle, as the cut is so deep that it meets the cut made by the first set of saw blades 12. The rotation of the saw blades 16 is stopped, and the blades are returned.

The two last steps in the process of the apparatus correspond to the steps of the process used in connection with the apparatus of Figs. 1-4 and consist in the hook being driven out of engagement with the carcase 1 and the hook and the blades 12, 16 being washed.

## Claims

1. Apparatus for automatically cutting out the jowl of a carcase (1) suspended by its hind legs from a first restraining arrangement, **characterized in that** the apparatus comprises
- a second restraining arrangement having a restraining means (2) and a controllable moving means (3) suitable for moving the restraining means into fixing engagement with a jaw portion (5) of the carcase;
- a cutting arrangement having at least one cutting device (6,12) and a controllable moving device (7,8,13,14) suitable for moving the cutting device(s) into cutting through the rind of the head of the carcase and loosening the jowl; and
- a control arrangement adapted to control the apparatus so that the moving means (3) moves the restraining means (2) into engagement with the jaw portion (5) of the carcase before the moving device (7,8,13,14) moves the cutting device(s) (6,12) into cutting through the rind.

2. Apparatus according to claim 1, **characterized in that** it comprises a cutting device (6,12), which is moved into cutting through the rind and further under the rind from the back side of the carcase (1) from a position at the ear of the carcase, and which is then driven downwards, forming a cut causing loosening of the jowl.

3. Apparatus according to claim 2, **characterized in that** the cutting device (6) comprises an elongated, substantially horizontally arranged knife blade positioned on one of the sides of a vertical mid-plane of a carcase suspended from the first restraining arrangement, said knife blade having a pointed front end (9) adapted to cut through the rind and a cutting edge (10,11) along a lower edge thereof, and curving with the inwardly curving side facing the mid-plane, and that the moving device (7,8) is adapted to drive the cutting device (6) into the carcase through the rind thereof and further under the rind until the tip emerges at the throat by a curve movement substantially corresponding to the curve of the knife blade.

4. Apparatus according to claim 3, **characterized in that** the moving device (7,8) is further adapted to move the knife blade in an oscillating curve movement while the knife blade is driven downwards, said curve movement corresponding to the curve movement during insertion.

5. Apparatus according to claim 2, **characterized in that** the cutting arrangement comprises a second cutting device (16), which is moved to cut through a cutting plane at the throat and further under the rind, and which is then driven downwards, forming a cut causing loosening of the jowl, the cut thus meeting the cut formed by the first cutting device (12) by cutting from the back side.

6. Apparatus according to claim 5, **characterized in that** it comprises a throat opening arrangement (15) having a throat opener which, by engagement with the edges of a cut in the throat of the carcase, forces the edges from each other and opens the cut, and a controllable moving arrangement (18,19) suitable for moving the throat opener into said engagement, and that the control arrangement is adapted to control the moving arrangement (18,19), the throat opener thus being brought into engagement with the edges before the second cutting device (16) is moved to cut through the cutting plane at the throat.

7. Apparatus according to claim 5 or 6, **characterized in that** the first and the second cutting device (12,16) comprise rotating blades and that the cutting arrangement comprises driving units for rotating the blades during performance of the cuts.

8. Apparatus according to any of the claims 1-7, **characterized in that** the vertical position at which the cutting device(s) initiate(s) cutting into the carcase is determined by the vertical position at which the restraining means (2) engages with the carcase.

9. Apparatus according to any of the claims 1-8, **characterized in that** the restraining means (2) comprises a hook for engagement with the lower jaw (5) of the carcase, and that the second restraining device is adapted to move the hook into engagement with the mandibular angle of a carcase from the throat side.

10. Apparatus according to any of the claims 1-9, **characterized in that** movement of the restraining means (2) into engagement comprises a movement of the means towards the carcase followed by a movement in a substantially downward direction away from the first restraining arrangement to exert a pull at the carcase for fixation of the carcase.

11. Method for automatically cutting out the jowl of a carcase suspended by its hind legs from a first restraining arrangement, **characterized in that**
- a controllable moving means moves a restraining means of a second restraining arrangement into fixing engagement with a jaw portion of the carcase;
- a controllable moving device moves a cutting device of a cuffing arrangement into cutting through the rind of the head of the carcase; and
- the controllable moving device then moves the cutting device downwards during loosening of the jowl.

## Patentansprüche

1. Vorrichtung zum automatischen Herausschneiden des Kiefers aus einer Karkasse (1), die an ihren Hinterbeinen von einer ersten Halteanordnung hängt, **dadurch gekennzeichnet, daß** die Vorrichtung umfaßt:
- eine zweite Halteanordnung, die ein Haltemittel (2) und ein steuerbares Bewegungsmittel (3), das zum Bewegen des Haltemittels in festen Eingriff mit einem Kieferabschnitt (5) der Karkasse geeignet ist;
- eine Schneidanordnung, die mindestens eine Schneideinrichtung (6, 12) und eine steuerbare Bewegungseinrichtung (7, 8, 13, 14) aufweist, die zum Bewegen der Schneideinrichtung(en) geeignet ist, zum Durchschneiden der Kopfschwarte der Karkasse und Lösen des Kiefers; und
- eine Steueranordnung, die angepaßt ist, um die Vorrichtung so zu steuern, daß das Bewegungsmittel (3) das Haltemittel (2) in Eingriff mit dem Kieferabschnitt (5) der Karkasse bewegt, bevor die Bewegungseinrichtung (7, 8, 13, 14) die Schneid-einrichtung(en) (6, 12) zum Durchschneiden der Schwarte bewegt.

2. Vorrichtung gemäß Anspruch 1, **dadurch gekennzeichnet, daß** sie eine Schneideinrichtung (6, 12) umfaßt, die zum Durchschneiden der Schwarte und weiter unterhalb der Schwarte von der Rückseite der Karkasse (1) von einer Position am Ohr der Karkasse bewegt wird und die dann einen Schnitt bildend nach unten getrieben wird, der das Lösen des Kiefers bewirkt.

3. Vorrichtung gemäß Anspruch 2, **dadurch gekennzeichnet, daß** die Schneideinrichtung (6) ein verlängertes, im wesentlichen horizontal angeordnetes Messerblatt umfaßt, das auf einer der Seiten einer vertikalen Mittelebene der Karkasse, die an der ersten Hängeanordnung aufgehängt ist, positioniert ist, wobei das Messerblatt ein scharfes Vorderende (9) aufweist, das angepaßt ist, um die Schwarte durchzuschneiden, und eine Schneidkante (10, 11) entlang einer unteren Kante desselben, die sich mit der nach innen gerichteten Krümmungsseite der Mittelebene gegenüberliegend krümmt, und daß die Bewegungseinrichtung (7, 8) angepaßt ist, um die Schneideinrichtung (6) in die Karkasse durch die Schwarte derselben und weiter unter die Schwarte zu treiben, bis die Spitze durch eine Kurvenbewegung, die im wesentlichen der Krümmung des Messerblattes entspricht, im Rachen auftaucht.

4. Vorrichtung gemäß Anspruch 3, **dadurch gekennzeichnet, daß** die Bewegungseinrichtung (7, 8) weiter angepaßt ist, um das Messerblatt in einer oszillierenden Kurvenbewegung zu bewegen, während das Messerblatt nach unten getrieben wird, wobei die Kurvenbewegung der Kurvenbewegung während des Einführens entspricht.

5. Vorrichtung gemäß Anspruch 2, **dadurch gekennzeichnet, daß** die Schneidanordnung eine zweite Schneideinrichtung (16) umfaßt, die bewegt wird, um eine Schneidebene am Rachen und weiter unter der Schwarte durchzuschneiden, und die dann einen Schnitt bildend nach unten getrieben wird, der ein Lösen des Kiefers bewirkt, wodurch der Schnitt den Schnitt trifft, der durch die erste Schneideinrichtung (12) durch Schneiden von der Rückseite gebildet wird.

6. Vorrichtung gemäß Anspruch 5, **dadurch gekennzeichnet, daß** sie eine Rachenöffnungsanordnung (15) umfaßt, die einen Rachenöffner aufweist, der durch Eingriff in die Kanten eines Schnittes im Rachen der Karkasse die Kanten voneinander auseinander drückt und den Schnitt öffnet, und eine steuerbare Bewegungsanordnung (18, 19), die zum Bewegen des Rachenöffners in diesen Eingriff geeignet ist, und daß die Steueranordnung angepaßt ist, um die Bewegungsanordnung (18, 19) zu steuern, wodurch der Rachenöffner in Eingriff mit den Kanten gebracht wird, bevor die zweite Schneideinrichtung (16) bewegt wird, um die Schneidebene im Rachen durchzuschneiden.

7. Vorrichtung gemäß Anspruch 5 oder 6, **dadurch gekennzeichnet, daß** die erste und zweite Schneideinrichtung (12, 16) rotierende Blätter umfaßt und daß die Schneidanordnung Antriebseinheiten zum Rotieren der Blätter während des Durchführens der Schnitte umfaßt.

8. Vorrichtung gemäß einem der Ansprüche 1-7, **dadurch gekennzeichnet, daß** die vertikale Position, an der die Schneideinrichtung(en) beginnt/beginnen, in die Karkasse zu schneiden, durch die vertikale Position bestimmt wird, an der das Haltemittel (2) in die Karkasse eingreift.

9. Vorrichtung gemäß einem der Ansprüche 1-8, **dadurch gekennzeichnet, daß** das Haltemittel (2) einen Haken zum Eingriff mit dem Unterkiefer (5) der Karkasse umfaßt, und daß die zweite Halteeinrichtung angepaßt ist, um den Haken in Eingriff mit dem Mandibulärwinkel der Karkasse von der Rachenseite zu bewegen.

10. Vorrichtung gemäß einem der Ansprüche 1-9, **dadurch gekennzeichnet, daß** die Bewegung des Haltemittels (2) in Eingriff eine Bewegung des Mittels in Richtung der Karkasse umfaßt, die von einer Bewegung in einer im wesentlichen abwärts gerichteten Richtung weg von der ersten Halteanordnung gefolgt wird, um an der Karkasse einen Zug zur Fixierung der Karkasse auszuüben.

11. Verfahren zum automatischen Herausschneiden des Kiefers aus einer Karkasse, die an ihren Hinterbeinen von einer ersten Halteanordnung hängt, **dadurch gekennzeichnet, daß**
- ein steuerbares Bewegungsmittel ein Haltemittel einer zweiten Halteanordnung in festen Eingriff mit einem Kieferabschnitt der Karkasse bewegt;
- eine steuerbare Bewegungseinrichtung eine Schneideinrichtung einer Schneidanordnung zum Durchschneiden der Schwarte des Karkassenkopfes bewegt; und
- die steuerbare Bewegungseinrichtung dann die Schneideinrichtung während des Lösens des Kiefers nach unten bewegt.

## Revendications

1. Appareil pour couper automatiquement la bajoue d'une carcasse (1) suspendue par ses pattes de derrière dans un premier dispositif de retenue, **caractérisé en ce que** l'appareil comporte
- un deuxième dispositif de retenue comportant des moyens de retenue (2) et des moyens de déplacement contrôlables (3) adaptés pour déplacer les moyens de retenue dans un engagement de fixation avec une partie de mâchoire (5) de la carcasse ;
- un dispositif de coupe ayant au moins un dispositif de coupe (6, 12) et un dispositif de déplacement contrôlable (7, 8, 13, 14) convenant pour entrer le(s) appareil(s) de découpe dans une découpe de la couenne de la tête de la carcasse et détacher la bajoue ; et
- un dispositif de commande adapté pour commander l'appareil de sorte que les moyens de déplacement (3) bougent les moyens de retenue (2) dans l'enclenchement avec la partie de mâchoire (5) de la carcasse avant que le dispositif de déplacement (7, 8, 13, 14) déplace le(s) dispositifs(s) découpe (6, 12) pour couper la couenne.

2. Appareil selon la revendication 1, **caractérisé en ce qu'**il comporte un dispositif de découpe (6, 12), qui déplacé dans la découpe de la couenne et en outre sous la couenne à partir de l'arriè de la carcasse (1) d'une position sur l'oreille de la carcasse, et qui est ensuite entraîné vers le bas, formant une coupe provoquant le détachement de la bajoue.

3. Appareil selon la revendication 2, **caractérisé en ce que** le dispositif de découpe (6) comporte une lame de couteau allongée et globalement horizontale placée sur un des côtés d'un demi plan vertical d'une carcasse suspendue au premier dispositif de retenue, ladite lame de couteau ayant une pointe avant acérée (9) adaptée pour la découpe de la couenne et un tranchant (10, 11) le long de son bord inférieur, et dont les côtés se courbent vers l'intérieur du demi plan, et telle que le dispositif de déplacement (7, 8) est adapté pour déplacer le dispositif de découpe (6) dans la carcasse par la couenne de celle-ci et ensuite sous la couenne jusqu'à ce que la pointe ressorte à la gorge par un mouvement courbe correspondant globalement à la courbe de la lame du couteau.

4. Appareil selon la revendication 3, **caractérisé en ce que** le dispositif mobile (7, 8) est en outre adapté pour déplacer la lame du couteau dans un mouvement d'oscillation courbe alors que la lame de couteau est entraînée vers le bas, ledit mouvement courbe correspondant au mouvement courbe de l'insertion.

5. Appareil selon la revendication 2, **caractérisé en ce que** le dispositif de découpe comporte un deuxième dispositif de découpe (16), qui est déplacé pour couper selon un plan de découpe de la gorge et ensuite sous la couenne, et qui est alors entraîné vers le bas, formant une découpe qui provoque la séparation de la bajoue, la découpe rencontrant de ce fait la découpe constituée par le premier dispositif de découpage (12) en découpant de l'arrière.

6. Appareil selon la revendication 5, **caractérisé en ce qu'**il comporte un dispositif d'ouverture de gorge (15) ayant un ouvreur de gorge qui, par engagement dans les bords d'une coupe dans la gorge de la carcasse, force les bords l'un par rapport à l'autre et ouvre la découpe, et un dispositif mobile contrôlable (18, 19) adapté pour entrer l'ouvreur de gorge dans ledit engagement, et **en ce que** le dispositif de commande est adapté pour commander le dispositif mobile (18, 19), l'ouvreur de gorge étant introduit ainsi dans l'engagement avec les bords avant que le deuxième dispositif de découpe (16) soit déplacé pour couper dans le demi plan de découpe de la gorge.

7. Appareil selon la revendication 5 ou 6, **caractérisé en ce que** le premier et deuxième dispositif de découpage (12, 16) comportent des lames tournantes et **en ce que** le dispositif de découpe comporte des unités d'entraînement pour tourner les lames pendant l'exécution des découpes.

8. Appareil selon une quelconque des revendications 1 à 7, **caractérisé en ce que** la position verticale à laquelle le ou les dispositifs de découpe démarrent le découpage de la carcasse est déterminée par la position verticale à laquelle les moyens de retenue (2) s'engagent dans la carcasse.

9. Appareil selon une quelconque des revendications 1 à 8, **caractérisé en ce que** le moyen de retenue (2) comporte un crochet pour l'engagement avec la mâchoire inférieure (5) de la carcasse, et **en ce que** le deuxième dispositif de retenue est adapté pour entrer le crochet dans l'engagement avec l'angle mandibulaire d'une carcasse du côté de gorge.

10. Appareil selon une quelconque des revendications 1 à 9, **caractérisé en ce que** le mouvement des moyens de retenue (2) dans l'engagement comporte un mouvement des moyens de retenue vers la carcasse suivie d'un mouvement dans une direction globalement de haut en bas en s'éloignant du premier dispositif de retenue pour exercer une traction sur la carcasse afin de fixer la carcasse.

11. Méthode pour couper automatiquement la bajoue d'une carcasse suspendue par ses pattes de derrière sur un premier dispositif de retenue, **caractérisé en ce que**
- un moyen de déplacement contrôlable déplace un moyen de retenue d'un deuxième dispositif de retenue dans un engagement de fixation avec une partie de mâchoire de la carcasse ;
- un dispositif mobile contrôlable déplace un dispositif de découpe d'un arrangement de découpe dans la découpe de la couenne de la tête de la carcasse ; et
- le dispositif mobile contrôlable déplace alors le dispositif de découpe vers le bas pendant le détachement de la bajoue.
